# EUROPÄISCHE PATENTANMELDUNG

(11) **EP 1 479 456 A1**
(43) Veröffentlichungstag der Anmeldung: **24.11.2004**
(21) Anmeldenummer: 04007425.4
(22) Anmeldetag: 26.03.2004
(51) Int. Cl.: B21B 31/07, B22D 11/128, F16J 15/34

(54) **Walze mit Gleitringdichtung für die Strangführung von Stranggiessanlagen**

(30) Priorität: 17.05.2003 DE 10322315
(71) Anmelder: Federal-Mogul Friedberg GmbH, 86316 Friedberg (DE); Schmidt, Otto Alexander, Dr. Ing., 47803 Krefeld (DE)
(72) Erfinder: Göbbels, Franz-Josef, 51399 Burscheid (DE); Schmidt, Otto Alexander, Dr.-Ing., 46562 Voerde (DE)

(57) **Zusammenfassung**

Vorgeschlagen wird eine Walze 1 für die Strangführung von Stranggießanlagen, mit Lagerzapfen 3,3' zur Aufnahme von Lagern 2,2', welche mittels eines Dichtungselementes abgedichtet sind. Das Dichtungselement ist als axial wirkende Gleitringdichtung (4) ausgebildet, die mindestens eine spezifische Flächenpressung von 30 N/cm² im Dichtspalt (6) aufweist.

## Beschreibung

Die Erfindung betrifft eine Walze für die Strangführung von Stranggießanlagen, mit Lagerzapfen zur Aufnahme von Lagern, welche mittels eines Dichtungselementes abgedichtet sind, wobei ein Dichtungselement gegen eine Stirnfläche der Walze abdichtend anliegt.

In Stahlwerken werden sogenannte Stranggießanlagen eingesetzt, welche zum Weitertransport des Gießproduktes, Strangfiihrungen verwenden, die aus einem Grundrahmen bestehen, in denen Rollen oder Walzen angeordnet sind, auf denen das Gußteil transportiert wird.

Die Walzen sind hierbei mit Lagern versehen, z. B. Rollen- oder Zylinderlager. Die Lager müssen nicht nur hohe Lasten aufnehmen, sondern unterliegen im Stahlwerk auch einer Umgebung, die mit Dampf, Walzzunder und Gießpulver angereichert ist. Darüber hinaus entsteht Korrosion durch Fluorwasserstoffsäure, außerdem ist die Umgebungstemperatur durch das Gießprodukt sehr stark aufgeheizt, so kommen Temperaturen von bis zu 280°C bei Stillstand der Anlage im Bereich der Lager vor. Damit die Lager ihrer Aufgabe erfüllen können, ist deshalb eine Abdichtung vorgesehen. Die Abdichtung hat die Aufgabe, sowohl von Außen eindringenden Schmutz fernzuhalten, als auch das für die Lager notwendige Schmierfett nach außen abzudichten.

Bisher weisen die in Rede stehenden Walzen Dichtelemente auf, die auf dem Prinzip der radialen Abdichtung beruhen. Die Walzen sind entweder mit Radialwellendichtringen oder mit ringförmigen Dichtelementen versehen. Da die Umfangsgeschwindigkeit der Walzen nicht sehr hoch ist, wurde diese Art der Abdichtung bisher als optimal angesehen.

Die DE 19628731 A1 offenbart eine solches Abdichtungsprinzip. Am Walzenzapfen sind O-Ringe angeordnet, die die dynamische Lagerabdichtung übernehmen. An einer Stirnfläche der Walze ist eine statische Dichtung vorgesehen, um die Gegenlauffläche der O-Ringe gegenüber der Walze abzudichten.

Während des Transportvorganges des endlosen Gussstranges erhitzen sich die in der Nähe des Gußstückes befindlichen Maschinenteile und die Temperatur im Bereich des abzudichtenden Lagers steigt auf ungefähr 80 bis 120° Celsius. Nach Gießende gehen die Temperaturen auf Umgebungstemperatur zurück. Dieser Vorgang führt dazu, dass im Bereich des abgedichteten Raumes ein Unterdruck entsteht, wodurch aus der näheren Umgebung Dampf oder Flüssigkeiten oder Gießpulver über die Dichtelemente eingesaugt werden. Das Einsaugen dieser unerwünschten Stoffe führt dann zu Korrosion und damit zu einem Ausfall der Lager. Durch die Erhitzung und Abkühlung der Bauteile wird darüber hinaus auch eine Längenänderung im Bereich der Lagerzapfen hervorgerufen, so dass die Dichtelemente eine axiale Bewegung ausüben. Bei dieser axialen Verschiebung gelangt ebenfalls Schmutz in den abzudichtenden Raum.

Als Gegenmaßnahme für die genannten Probleme wurden sogenannte automatische Fettzufuhrsysteme entwickelt. Jedem einzelnen Lager einer Walze wird über ein Schmiersystem kontinuierlich Fett zugeführt. Dadurch, dass das Innere des Gehäuses immer mit Fett gefüllt ist, wird ein Eindringen von Feuchtigkeit in das Gehäuse verhindert. Da das Fett kontinuierlich zugeführt wird, dringt überschüssiges Fett über die Dichtelemente nach Außen. Das abgeführte Fett vermischt sich mit Gießpulver und Walzzunder, bildet Klumpen und lagert sich am Rahmen ab. Dieses mit Gießpulver und Walzzunder vermischte Fett verhärtet sich und muß einerseits aufwendig vom Rahmen abgetrennt werden und andererseits teuer entsorgt werden. Neben den hohen Entsorgungskosten entstehen auch hohe Materialkosten für das Fett. Hinzu kommen die hohen Kosten für das Pump- und Leitungssystem des automatischen Fettzufuhrsystems.

Der Erfindung liegt die Aufgabe zugrunde, eine gattungsgemäße Walze dahingehend zu verbessern, dass bei möglichst einfachem Aufbau eine verbesserte Lagerabdichtung geschaffen ist, die keinerlei Umweltprobleme verursacht und sich durch niedrige Kosten kennzeichnet.

Diese Aufgabe wird erfindungsgemäß durch die Merkmale des Patentanspruchs 1 gelöst.

Vorteilhafte Ausgestaltungen der Erfindung sind in den Unteransprüchen dokumentiert.

Durch die erfindungsgemäße Maßnahme ist eine Walze geschaffen, die bzw. deren Lager über eine Flächendichtung abgedichtet sind, deren Dichtfläche in axialer Richtung mit einer definierten Vorpannung belastet ist. Durch die besondere Dichtung ist bei axialer Längenänderung der Bauteile eine Abdichtung geschaffen, die keine Schmutzteile in den Dichtspalt zieht und die keine Flüssigkeit oder Dämpfe in das Innere der abzudichtende Räume saugt. Eine kontinuierliche Fettzufuhr zu den Lagern ist damit nicht mehr notwendig.

Die Erfindung ist anhand eines Ausführungsbeispieles in der Zeichnung dargestellt und wird im folgenden näher erläutert. Es zeigen:
- Fig. 1: Ausschnitt einer bekannte Strangführung mit bisher üblichen Walzen
- Fig. 2: Teilansicht einer erfindungsgemäßen Walze
- Fig. 3: Ausführungsbeispiel einer Lagerabdichtung für die Walze gemäß Fig. 2
- Fig. 4: Ansicht gemäß Fig. 3 auf einen geteilten Gleitring

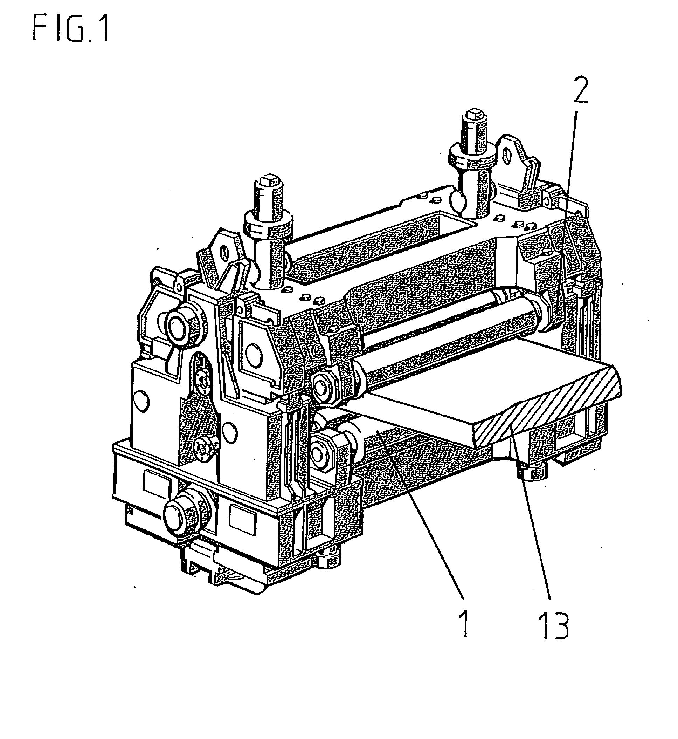

Die Figur 1 zeigt einen Ausschnitt einer Strangführung mit üblichen Walzen 1.

Derartige Walzen 1 sind jeweils zu einem Paar angeordnet und in Transportrichtung einer Strangführung einer Stranggießanlage vorgesehen. Gegossene und noch nicht abgekühlter endloser Stahl 13 wird zwischen den rotierende Walzen 1 transportiert.

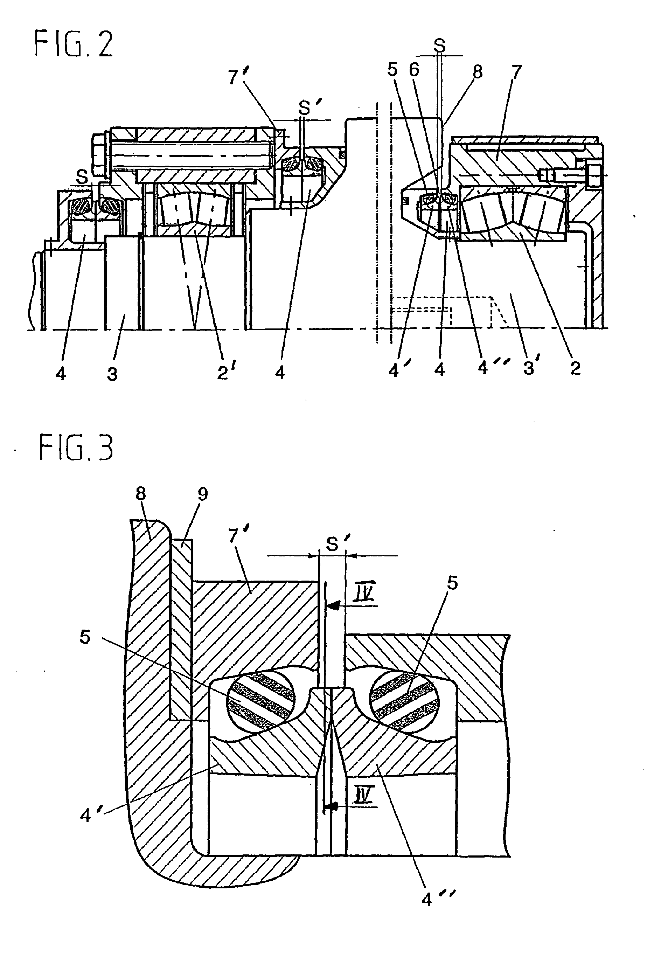

Die Figur 2 zeigt eine erfindungsgemäße Walze 1. Die Walze 1 ist über auf Lagerzapfen 3, 3' befestigte Lager 2, 2' gestützt. Eine Seite der Walze 1 ist als Festlager 2 und die andere Seite als Loslager 2' ausgebildet. Im Falle einer Wärmeausdehnung beschränkt sich die axiale Längenänderung auf die Seite des Loslagers 2'. Die Lager 2, 2' sind über eine axial wirkende Gleitringdichtung 4 mit einem rotierenden 4' und einem feststehende Gleitring 4" abgedichtet. Über elastische Dichtringe 5 wird eine axiale Flächenpressung von mindestens 30 N/cm² im Dichtspalt bzw. auf der Dichtfläche 6 erzeugt. Die Gleitringe 4', 4" können in separaten Halteteilen 7, 7' festgelegt sein oder aber die Halteteile können einstückig an der Walze 1 angeformt sein. Durch die axiale Anpresskraft der Dichtringe 5 wird eine Dichtkraft erzeugt, die dafür sorgt, dass das Einsaugen von Luft, Wasser oder Dampf verhindert wird. Die Gefahr von Korrosion im Lager ist somit beseitigt und die Funktion des Lagers über einen langen Zeitraum gewährleistet. Im Bereich des Lagers 2, 2' sind die Gleitringe 4', 4" so in ihren Halteteilen 7, 7' angeordnet, dass sich ein Spalt S, S' ergibt, wobei der Spalt S' größer ausgebildet ist als der Spalt S, da auf der Seite des Loslagers 2' die Längenänderung durch Wärmeausdehnung aufgenommen wird. Im Dichtspalt 6 befindet sich eine dünne Fettschicht des im Lager 2, 2' vorhandenen Fettes (nicht dargestellt). Da bei Längenänderung der Walze keine Schmutzteilchen in den abzudichtenden Raum befördert werden und die Dichtheit des Systems, trotz sich einstellenden Unterdrucks im abzudichtenden Raum, gewährleistet ist, kann auf ein kostenträchtiges Fettzuführsystem verzichtet werden. Da auch kein überschüssiges Fett abgeführt werden muß, entstehen keine Kosten für eine teure Abfallbeseitigung.

Die Figur 3 zeigt eine alternative Ausgestaltung der Walze 1 im Bereich des Loslagers 2'. Zwischen dem Halteteil 7' und der Stirnfläche 8 der Walze 1 ist ein Hitzeschild 9 vorgesehen. Auf diese Weise wird der Wärmefluß von der Walze 1 zu den Gleitringen 4', 4" unterbunden und somit einer Temperaturerhöhung entgegengewirkt.

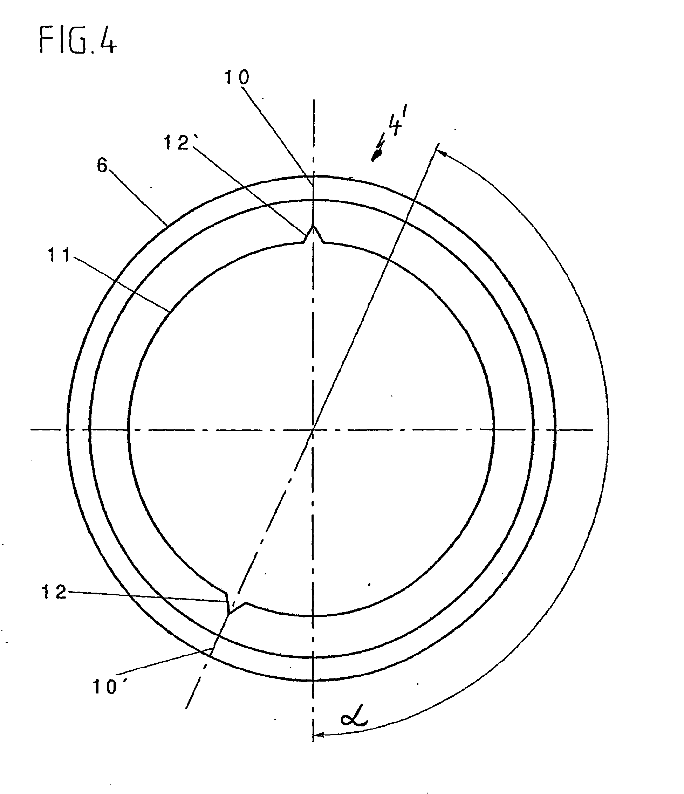

Die Figur 4 zeigt eine Ansicht auf die Dichtfläche 6 eines Gleitringes 4'. Derartige Gleitringe kommen zum Einsatz für Walzen 1, bei denen nicht nur am Endbereich ein Zapfen 3, 3' vorgesehen ist, sondern bei denen im mittleren Bereich der Walze ein zusätzliches Lager vorgesehen ist (nicht dargestellt). Derartige Walzen 1 sind für große statische Lasten ausgelegt. Der im mittleren Bereich angeordnete Zapfen ist aber nur mit einem geteilten Lager abzustützen, da man das Lager 2, 2' nicht von außen über den Zapfen schieben kann.
Auch für diese Fälle ist die erfindungsgemäße Walze 1 geeignet, indem hier eine Gleitringdichtung 4 verwendet wird, bei der die Gleitringe 4', 4" ebenfalls geteilt ausgebildet sind. Da die Umfangsgeschwindigkeit aber nur sehr gering ist, meistens < 3 U/min, eignet sich hier nur eine besondere geteilte Gleitringdichtung.
An der Innenumfangsoberfläche 11 des Gleitringes 4' sind Trennfugen 12, 12' eingearbeitet. Die Trennfugen 12, 12' sind diametral versetzt angeordnet und in ihrem Verlauf auf den Gleitringmittelpunkt ausgerichtet. Die Trennfugen 12, 12' sind um den Winkel 180° + 10° oder 180° - 10° versetzt angeordnet. Da der gegenüberliegende Gleitring 4" die gleiche Aufteilung aufweist, ist gewährleistet, dass die Trennfugen nicht übereinander stehen können und die Gleitringe 4', 4 " sich nicht verhaken und damit undicht werden.
Im eingebauten Zustand werden die geteilten Gleitringe 4', 4" lediglich über die Dichtringe 5 zusammengehalten.

## Patentansprüche

1. Walze für die Strangführung von Stranggießanlagen, mit Lagerzapfen zur Aufnahme von Lagern, welche mittels eines Dichtungselementes abgedichtet sind, wobei ein Dichtungselement gegen eine Stirnfläche der Walze abdichtend anliegt, **dadurch gekennzeichnet, dass** das Dichtungselement als axial wirkende Gleitringdichtung (4) ausgebildet ist, die mindestens eine spezifische Flächenpressung von 30 N/cm² auf der Dichtfläche (6) im Dichtspalt aufweist.

2. Walze nach Anspruch 1, **dadurch gekennzeichnet, dass** die Gleitringdichtung (4) aus einem feststehenden (4") und einem rotierenden Gleitring (4') besteht, wobei der rotierende Gleitring (4") sich an der Stirnfläche der Walze (1) axial abstützt und der feststehende Gleitring (4') im Bereich des abzudichtenden Lagers (2, 2') festgelegt ist und dass die Gleitringe (4,4') aus metallischen Werkstoffen gebildet sind.

3. Walze nach den Ansprüchen 1 und 2, **dadurch gekennzeichnet, dass** die Gleitringdichtung (4) eine an sich bekannte Laufwerkdichtung ist, welche Halteteile (7, 7') zur Aufnahme von elastischen Dichtringen (5) aufweist.

4. Walze nach mindestens einem der Anprüche 1 bis 3, **dadurch gekennzeichnet, dass** die abgedichteten Lager (2,2') mit Fett geschmiert sind und dass das Fett zur Schmierung der Dichtfläche (6) dient.

5. Walze nach mindesten einem der Ansprüche 1 bis 4, **dadurch gekennzeichnet, dass** die Gleitringe (4', 4") in Umfangsrichtung gesehen, eine Trennfuge 10, 10' aufweisen, so dass sie geteilt ausgeführt sind.

6. Walze nach Anspruch 5, **dadurch gekennzeichnet, dass** die Trennfugen um den Winkel 180° + 10° oder 180° - 10° versetzt sind.

7. Walze nach Anspruch 5 und 6, **dadurch gekennzeichnet, dass** die Gleitringe (4', 4") mittels der elastischen Dichtringe (5) in der Betriebsposition gehalten sind.

8. Walze nach mindestens einem der Ansprüche 1 bis 7, **dadurch gekennzeichnet, dass** die Walze (1) an der Stirnfläche ein Hitzeschild (9) aufweist, das mit den Gleitringen (4', 4") in Wirkverbindung steht.
